# EUROPEAN PATENT SPECIFICATION

(11) **EP 0 566 634 B1**
(45) Date of publication and mention of the grant of the patent: **18.09.1996**
(21) Application number: 92902924.7
(22) Date of filing: 14.01.1992
(51) Int. Cl.: F23C 11/02, B01J 8/34, F23M 9/06

(54) **FLUIDIZED BED COMBUSTOR, EQUIPPED WITH MEANS FOR IMPROVING THE DISTRIBUTION OF FUEL AND GASES**
WIRBELSCHICHT-COMBUSTOR MIT MITTELN ZUR VERTEILUNG VON BRENNSTOFFPARTIKELN UND BRENNGAS
BRULEUR A DEUX ETAGES DE GAZEIFICATION ET LIT FLUIDIFIE EQUIPE DE MOYENS SERVANT A AMELIORER LA DISTRIBUTION DU COMBUSTIBLE ET DES GAZ

(30) Priority: 15.01.1991 SE 9100122
(43) Date of publication of application: 27.10.1993
(73) Proprietor: ABB CARBON AB, 612 82 Finspong (SE)
(72) Inventor: ANDERSSON, Mats, S-612 36 Finspong (SE)
(74) Representative: Boecker, Joachim, Dr.-Ing.
(86) International application number: PCT/SE92/00016
(87) International publication number: WO 92/13237

(56) References cited:
- EP-A- 0 243 845
- EP-A- 0 321 308
- JP-A-63 014 006
- US-A- 4 130 071
- US-A- 4 161 917
- US-A- 4 429 644
- PATENT ABSTRACTS OF JAPAN, Vol. 12, No. 212, M710, Abstract of JP 63014006, publ 1988-01-21 (UBE IND LTD)
- DERWENT'S ABSTRACT, No. 90-169 971/22, SU 1 521 984, publ. week 9022 (URALS KIROV POLY)

## Description

The invention relates to a power plant according to the precharacterising part of claim 1, which power plant is equipped with means for improving the distribution of fuel and gases.

### TECHNICAL FIELD

The intention is to achieve a higher efficiency and reduced emissions by a more efficient combustion. The invention is primarily intended to be applied to a PFBC power plant in which combustion is performed at a pressure exceeding the atmospheric pressure.

### BACKGROUND ART, THE PROBLEMS

Firing with a particulate fuel in a fluidized bed requires a good distribution of a fuel fed into the bed for a complete combustion of the particles to take place. The fuel in the bed comprises one gaseous part and one part of particles which are both capable of being blown off and not capable of being blown off.

If the number of feed points for fuel is too small, an accumulation of fuel takes place in a plume-shaped region above each individual fuel feed nozzle. In this region, all available oxygen in the fluidization air is rapidly consumed, in which case particles which have not been burnt out completely of their fuel content reach the bed surface and are blown off to a freeboard above the bed. From the freeboard the flue gases are passed on from the combustion to ash cleaners, so-called cyclones.

A problem which may arise when particles containing unburnt residues of fuel occur is that fires may arise at other locations in the plant. For example, it is known that insufficiently burnt-out particles may burn at undesired points, such as in the freeboard or in the cyclones. Solid particles and gas with still combustible constituents at these points may encounter fluidization air which still contains oxygen residues since air may have passed regions with a lower concentration of fuel, that is, between the above-mentioned plume-shaped combustion regions, during the flow upwards through the bed, this air not being depleted of oxygen by combustion.

Fires at the above-mentioned points are unacceptable and entail harmful thermal stresses on the construction material used, since an after-combustion after the bed increases the temperature of the flue gases. In addition, the composition of emissions in the flue gases may be changed in an undesired and uncontrolled manner.

Emission of nitrogen oxides may increase since the use of ammonia for reducing these oxides is rendered difficult when ammonia is burning in zones with coal combustion. Also the emission of sulphur may increase since the use of a sorbent, fed into the bed, for reducing sulphur is rendered difficult if the above-mentioned plume-shaped regions occur in the bed. This is due partly to the compound formed during the sulphur reduction not being stable at low oxygen contents, and partly to combustion taking place in zones where the sorbent content is lower than in the bed. Further, of course, the effective burn out of the fuel content in the particles is reduced, which reduces the efficiency of the plant.

The bed normally accomodates a tube bundle for steam generation above the fuel feed nozzles. Another problem which may arise is that fluidization air which is completely depleted of oxygen gives an increased corrosion on the tube material, which in turn leads to a rapid material wear in the tube bundle. A better distribution of the fuel leads to a reduced risk of corrosion in the plume-shaped regions mentioned since regions with a permanently low oxygen content in the fluidization air are eliminated.

A good distribution of the fuel in the bed can be achieved by the particulate fuel being supplied to the bed at a large number of feed points in the form of well distributed fuel feed nozzles, as disclosed, for example, in Swedish patent application 9000354-2.

In case of a large number of fuel feed points, an even distribution is obtained in the fluidized bed between the fuel and the fluidization air. This makes it possible for the gaseous part of the fuel and that part of the fuel which constitutes particles capable of being blown off to burn out completely before this part in the form of burnt out particles reaches the surface of the bed and is blown off.

A design with a large number of fuel feed points is costly and difficult to realize because of a complicated network of distribution conduits to the fuel feed nozzles, as well as problems if the different conduits are clogged.

Another possible solution to the mentioned problems is to arrange some form of distributor of the fuel in the bed after feeding of the fuel. The patent GB 1 326 651, for example, shows a distributor in the form of a rotating wheel provided with blades and located above a fuel feed opening. Upon rotation of the wheel, the fuel is distributed in the bed.

Using some type of movable parts to achieve a good fuel distribution in the bed is, however, not suitable. The movable parts are influenced by greatly destructive forces, as, for example, the high temperature. In addition, the availability for service of any devices is greatly limited or disturbing for the operation of the plant.

The US-A-4 429 644 describes a fluidized bed combustor which is fired with coal particles of fine grain fractions. symmetrically above each suppling coal nozzle is arranged a perforated plate within the fluidizable bed material, which plate is oriented horizontally parallel to the bottom of the combustor. The plate is either plane or vaulted. The plate serves to destroy bubbles in which small coal particles are entrained.

The US-A-4 130 071 describes a fluidized bed combustor where also efforts are made to ensure an even distribution of the coal grains and other solids, such as dolomite, in the fluidized bed. This combustor does not feature fuel nozzles extending into the fluidizable bed. Instead, below the distributor plates, which form the bottom of the combustion chamber, the solid coal particles are fed into one or more ducts from where they are blown by the fluidization air evenly distributed through the distribution plates. On top of the distribution plates are arranged alumina stones which, on the one hand, shield the distributor plates against the heat from the bed and, on the other hand, contribute to an even distribution of the fuel across the area of the combustion chamber.

### SUMMARY OF THE INVENTION, ADVANTAGES

The present invention relates to distributor equipment comprising a lower and/or an upper distributor device. The distributor device is fixedly mounted in a fluidized bed and/or at or above the upper limit of the bed in a power plant. Its task is to spread upwardly-rising fuel, in the form of gas and particles, and to distribute the fuel over a larger area and more evenly in the bed as well as to create, partly above and partly below the upper limit of the bed, turbulence of the gas and movement of the particles out towards the periphery of the bed.

The distributor device can be formed in many different ways. The design differs somewhat between the lower one, which is intended to be arranged in the bed above a fuel feed nozzle, and the upper one, which is intended to be arranged at or above the surface of the bed. The lower distributor device, which is intended to be arranged in the bed, will hereinafter be referred to as a "bed distributor", whereas the upper distributor device, which is intended to be arranged at or above the bed surface, will be referred to as a "freeboard distributor".

The distributor equipment may either comprise only the bed distributor or only the freeboard distributor, or both the bed distributor and the freeboard distributor.

Thus, the task of the bed distributor is to spread the fuel rising upwardly in the bed and to distribute it over a larger area in the bed, and at the same time to distribute the fuel more evenly in the bed. This is achieved by designing the bed distributor with a receiving mid-portion and, directed outwards from this mid-portion, with a distributor part with obliquely upwardly-inclining wing-like members, hereinafter called wings, or an obliquely upwardly-directed funnel-shaped frustum of a cone, where the wing-like members or the cone or the body bring about the mentioned distribution of the fuel by forcing the fuel to follow an outwardly-directed obliquely upwardly-rising flow of the fuel, seen from the mid-portion. By means of holes in the wings or in the cone, the fuel is released evenly distributed over the surface in the bed which is covered by the bed distributor.

In the simplest case the bed distributor is formed with two wings which at their respective lowest part, the base, are connected to the mid-portion. The wings are horizontal or incline upwards, and outwards, towards their free ends, they are tapering. In addition, holes are made in each wing and distributed over the wing surface. The mid-portion is not provided with holes. The mid-portion receives bubbles, rising upwards in the bed, with contents of fluidization air, fuel gases and fuel particles. The bubbles are slowed down and distributed along the wings which together with the mid-portion prevent the bubbles from rising too rapidly and hence leave the bed with contents of partially unburnt fuel. The bubbles are guided outwards, upwards by the oblique wings and are forced to follow these until they either encounter a hole in a wing or until the bubbles in their sliding movement obliquely upwards along a wing are forced over the edge of the wing since this has a tapering shape. Because of the wing shape, its inclination and with the aid of the holes, the mentioned bubbles are distributed evenly over a larger area, thus achieving a more complete combustion of the fuel.

An their free ends, the wing tips of the bed distributor may terminate in an almost horizontal portion. The horizontal portions slow down bubbles and particles and gradually release these into the bed.

The holes in the device contribute to gas being released through the respective wings over the entire surface thereof. The absence of holes in the mid-portion at the bases of the wings facilitates the start of the direction of the bubbles and reduces the risk of agglomerates of fuel particles possibly adhering to holes directly above the fuel feed nozzles at the very point where the fuel concentration is largest and the velocity of the fuel particles is lowest, which could be the case if also the mid-portion were provided with holes.

The upward inclination of the wings of the bed distributor is determined by the extent to which bubble direction is desired. Since the space between the fuel nozzles and the tube bundle, located in the bed, for steam generation is limited, the length of the wings of the bed distributor is determined by this available space and the upward inclination of the wings from the horizontal line. The width of the mid-portion and hence the bases of the wings are selected in dependence on the desired distribution for the fuel in the bed. However, a bed distributor according to the invention must not take up too large a part of the bed area.

The exact location of the bed distributor formed with two wings should be adjustable in the horizontal direction to enable it to be placed strategically in the plume of upwardly-rising bubbles which is formed close to the fuel feed nozzles.

In alternative embodiments of the bed distributor this may be provided with downward bends or folds along the long sides of the wings. This increases the bubble-directing ability of the bed distributor and creates a space wich, at times, is particle-free below the bed distributor and hence facilitates the combustion of combustible gases in the fluidized bed. The fact that the space below the bed distributor is occasionally particle free also contributes to an increased fuel distribution since the fuel can penetrate more easily further into the bed .

The design of the bed distributor is such that it captures as much fuel as possible below the widest part and then the fuel is distributed in the direction of the wings. Combustible gas and/or combustible particle are released through the holes and along the tapering edge.

The task of the freeboard distributor is, at or above the upper limit of the bed, partly to spread fuel in a horizontal direction, partly to create turbulence. The turbulence and the horizontal movement of the particles are brought about by designing the freeboard distributor as well as the bed distributor with a distributor part with oliquely upwardly-inclined wings or an obliquely upwardly-directed cone. However, the mid-portion is replaced by a mid-section in which the bases of the wings are joined in the lowest part of the freeboard distributor. The wings of the freeboard distributor are whole and straight, that is, they have no holes and no tapering shape. The freeboard distributor is formed such that bed material and gases are transported out from the central parts of the bed towards the bed periphery while at the same time turbulence is created in the freeboard above the wings. The turbulence permits gases to be mixed such that any unburnt coal particles and gases are burnt in or as close to the bed as possible.

The turbulent mixing also renders the use of ammonia more efficient for reduction of nitrogen oxides since burning zones in the freeboard are reduced and the ammonia is not burnt. This also applies to sorbent for reducing sulphur since the combustion is reduced in zones where the content of sorbent is lower than in the bed.

In the simplest case, the freeboard distributor as well as the bed distributor are formed from two wings, interconnected at the mid-section, which are diametrically opposite. The respective wings in the freeboard distributor incline upwards and are shaped as a roof ridge, that is, as a V turned upside-down. The roof ridge shape renders difficult the build-up of dust on the wings.

The width of the wings is chosen in dependence of the desired distribution for the fuel in the upper part of the bed and in the freeboard. What size to choose for the wings of the freeboard distributor depends on how great the plume problem is.

In alternative embodiments, the wings of the freeboard distributor may be bent in a transverse section. Alternatively, the wing surface is plane and provided with downward folds along the long sides of the wings with the openings of the wings facing downwards.

A suitable number of distributor devices is chosen; however, at least one distributor device is arranged above each fuel feed nozzle. Additional distributor devices are possibly arranged between those arranged above the fuel feed nozzles.

The elongated shape of the distributor device, that is, the bed distributor and the freeboard distributor, respectively, is dependent on the location of the fuel nozzles in the bed. In a conceived case with several nozzles placed in parallel with each other, good coverage is obtained of regions with a need of improved fuel distribution in the bed with distributor devices of elongated shape. In case of other configurations of fuel feed, it may be necessary to design the distributor device according to other patterns. It is possible, for example, to design a distributor device provided with only one wing. Further, the mid-portion of the distributor device may be given a conical shape with a down-wardly-turned tip, where more than two wings of the designs mentioned above or below are distributed along the periphery of the cone.

As mentioned, the distributor part in the device in the form of the different variants of wings may be formed with a funnel-shaped conical part, the envelope surface of the conical part having the shape of the envelope surface of the frustum of a cone. The envelope surface of this frustum of a cone has its smallest cross section area connected to the mid-portion of the device whereas the largest cross section area is placed at a higher level. In the following, such a described frustum of a cone, utilized in the device, is referred to as a "bed cone" and a "freeboard cone", respectively.

The bed cone and the freeboard cone, respectively, exhibit a closed curve shape in a horizontal cross section, the closed curve being arbitrary but preferably circular or elliptical. To achieve the intended distribution of fuel, the bed cone is provided with holes, whereby the fuel is directed to the desired extent to the space in the bed above the distributor device.

The material in the distributor device may in its simplest form consist of steel or some steel alloy or some other metal alloy which withstands the high temperatures occurring, the greatly corrosive environment and the particle-laden surrounding. The distributor device may also be made of ceramics.

The distributor device may be cooled. The cooling is suitably performed with the aid of tubes in which cooling water is transported and which are arranged in the distributor device or on its upper or lower surface.

To further improve the effect of the invention, extra fluidization air may be supplied below the bed distributor, for example by means of extra nozzles for fluidization air below the bed distributor or by arranging nozzles for fluidization air more closely together. The extra air had two effects. On the one hand, it spreads the fuel better by the increased bubble flow along the respective directions of the wings, and on the other hand, the extra supplied fluidization air makes possible an additional combustion of combustible gas. The increased flow of fluidization air locally at one fuel feed nozzle near the bed wing may provide increased erosion in the tube bundle. This risk is reduced through the improved distribution of the bubbles by the distributor device.

The advantage of distributor equipment according to the invention is that a good fuel distribution, primarily with the aid of the bed distributor, can be achieved without an increase of the number of fuel feed points having to be made. Primarily with the aid of the freeboard distributor, the combustion upstream of the freeboard will become more efficient by the creation of turbulence and a horizontal movement of material around or below the upper limit of the bed. The freeboard distributor conducts the gases out from the centre of the bed to the more oxygen-rich parts in the periphery. The advantage of controlling the combustion to take place substantially in a more oxygen-rich space is that the temperature in the freeboard and the gas turbine is kept low and that heat released in the bed is utilized in a steam cycle. The gas which passes up through the freeboard will thus have a more uniform temperature distribution. Since the gas is given a heavy turbulence, better conditions are created for the reduction of nitrogen oxide by mixing ammonia into the freeboard.

### BRIEF DESCRIPTION OF THE DRAWINGS

Figure 1 shows a schematic view of the boiler part of a power plant, in which distributor equipment comprising both a bed distributor and a freeboard distributor according to the invention is shown arranged in a fluidized bed.

Figures 2a-2c show the location and attachment of a bed distributor according to the invention seen from above, from the side, and in a section A-A.

Figures 3a-3c shows the location and attachment of a freeboard distributor according to the invention, seen from above, from the side, and in a section B-B.

Figures 4a-4c illustrate different examples of the bed distributor seen in a section across the longitudinal direction.

Figures 5a-5c illustrate different examples of the freeboard distributor seen in a section across the longitudinal direction.

Figure 6 schematically shows a view from above of distributor equipment comprising a plurality of bed distributors and freeboard distributors arranged in/at/above the bed.

Figure 7 illustrates a bed distributor with the distributor part made as the frustum of a cone.

### DESCRIPTION OF THE PREFERRED EMBODIMENTS

With reference to the accompanying figures, a number of embodiments of distributor equipment according to the invention will be described.

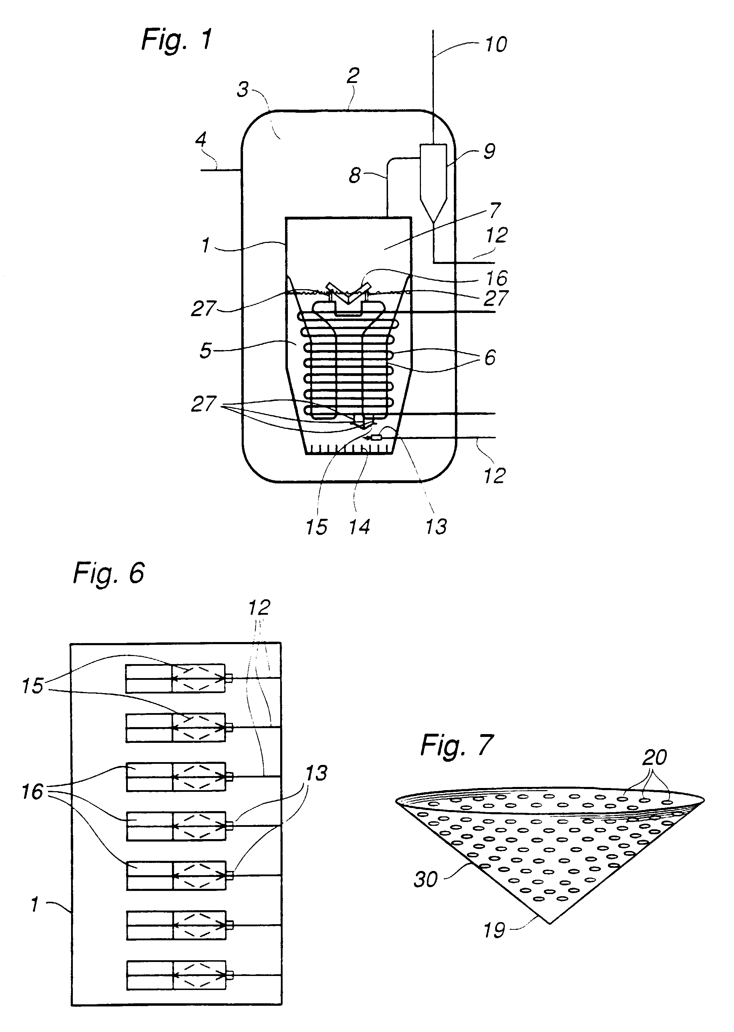

Figure 1 schematically shows a combustor 1 in a PFBC power plant, in which combustion is performed at a pressure considerably exceeding the atmospheric pressure. In the figure the combustor 1 is located inside a pressure vessel 2. The space 3 in the pressure vessel 2 outside the combustor 1 is supplied with compressed fluidization air from a compressor (not shown) via a conduit 4. The combustor 1 contains a fluidizable bed 5 of particulate material in which a fuel is burnt. In addition, the combustor 1 includes tubes 6 for generating steam for a steam turbine (not shown) and for cooling the bed 5. Flue gases leaving the bed 5 are collected in a freeboard 7 and are passed in a conduit 8 to a cleaning plant symbolized by a cyclone 9 where dust is separated, and from the cyclone 9 in a conduit 10 to a gas turbine (not shown). Separated dust is discharged from the cyclone 9 through a conduit 11. Fuel is fed into the combustor 1 via a conduit 12 and via nozzles 13. The combustor 1 is supplied with fluidization air from the space 3 via nozzles 14 for fluidization of the material in the bed 5 and for combustion of the supplied fuel.

The three main embodiments comprise arranging in the bed 5 distributor equipment comprising bed distributors 15 only or freeboard distributors 16 only, or both bed distributors 15 and freeboard distributors 16. The choice of embodiment depends on the geometry of the bed 5 and on the current plume problem.

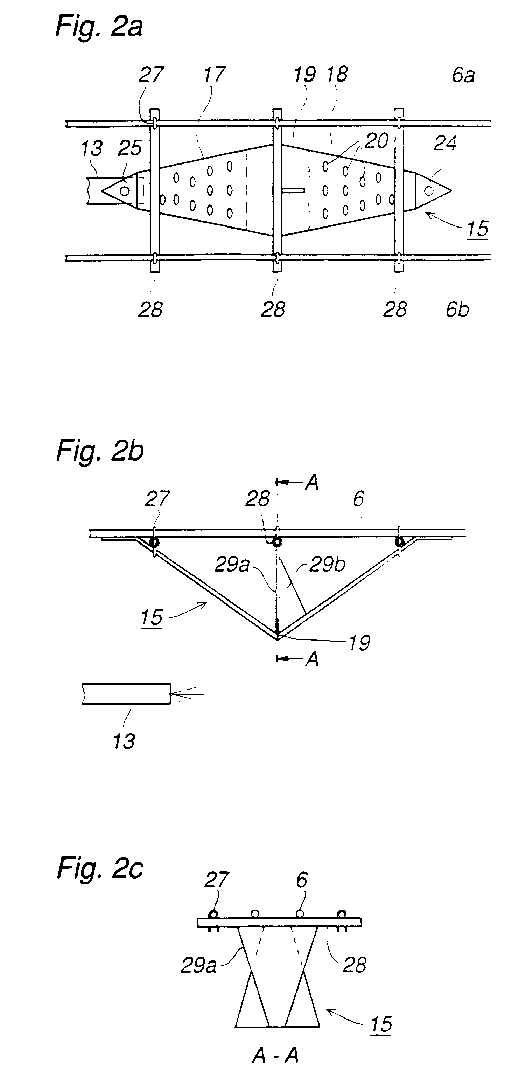

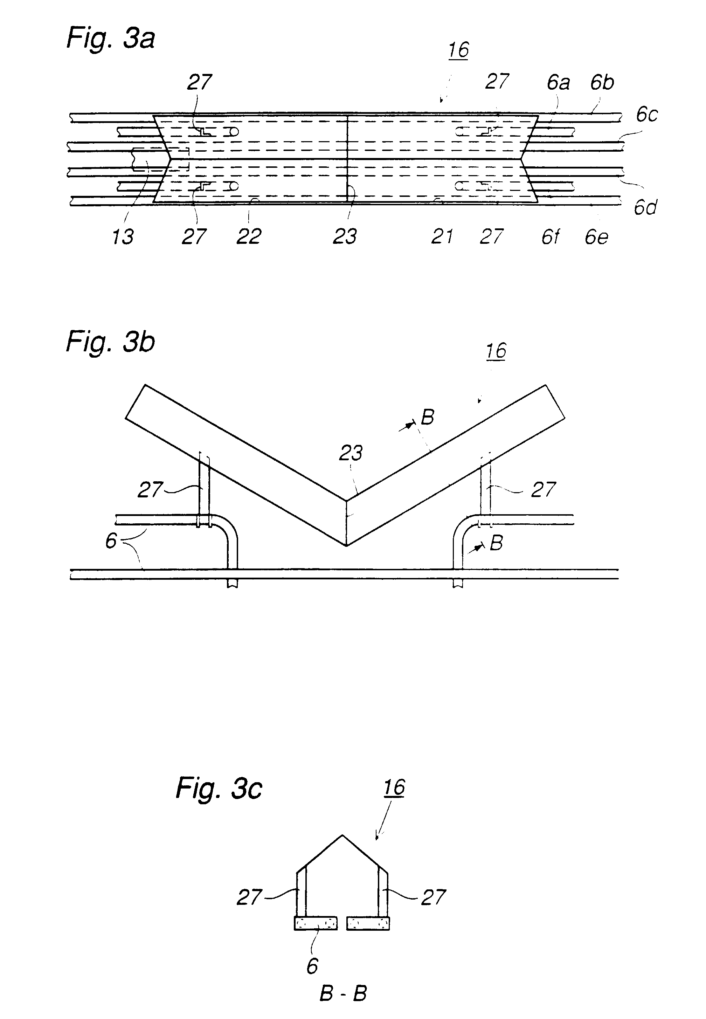

Figures 2a and 3a show the bed distributor 15 and the freeboard distributor 16, respectively, in a view from above. The bed distributor 15 is formed with a distributor part in the form of two wings 17, 18 tapering outwardly towards their free ends, diametrically opposite to each other and with their widest and lowest parts, bases, changing into a mid-portion 19 common to both wings 17, 18. Along the wings 17, 18 of the bed distributor 15, throughholes 20 are provided. The mid-portion 19 has no holes 20. The freeboard distributor 16 on the other hand has a distributor part in the form of two whole and straight wings 21, 22, placed diametrically opposite to each other and joined in a mid-section 23. The respective wings 21, 22 of the freeboard distributor 16 are formed as the ridge of a roof, that is, as an inverted V, which efficiently renders difficult the build up of dust in the wings 21, 22 of the freeboard distributor 16.

The wings 17, 18 of the bed distributor are horizontal or incline upwards from the horizontal plane with an angle of inclination of 20° in the embodiment. A greater angle of inclination may be preferred but this creates problems with space requirement in the available space in the vertical direction within the bed 5. The wings 21, 22 of the freeboard distributor 16 are horizontal or incline upwards from the horizontal plane with an angle of inclination of between 20° and 45°, suitably 30°.

In the embodiment, Figures 2b and 3b show the bed distributor 15 and the freeboard distributor 16, respectively, in a view from the side. As will be clear from Figure 2b, the respective free ends, tips 24, 25, of the wings 17, 18 of the bed distributor 15 exhibit a flattened out shape, which may have a horizontal extension. The tips 24, 25 may be made tapering or with a rounded or straight termination, whereas the wings 21, 22 of the freeboard distributor 16 are straight.

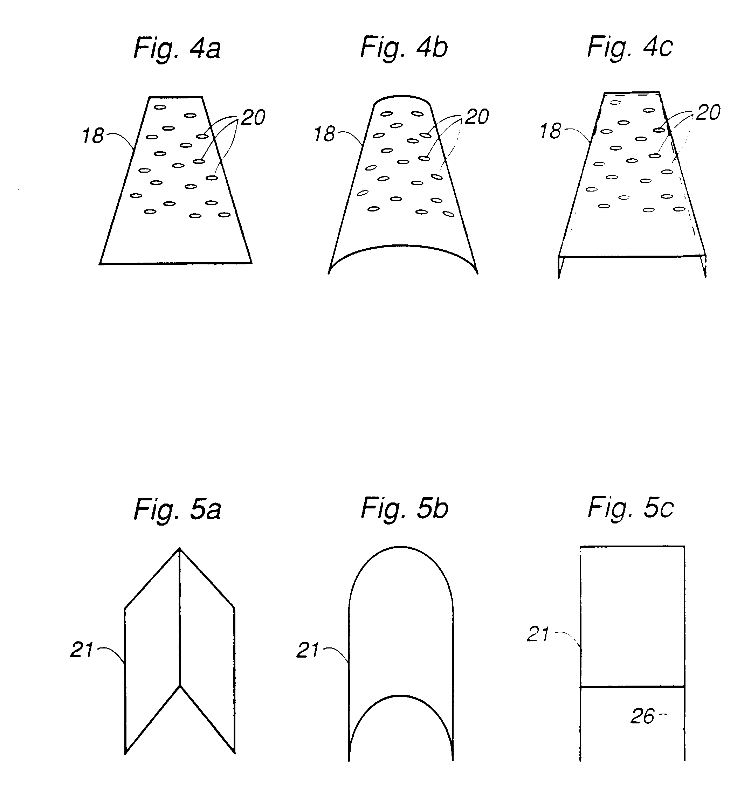

Further, Figures 4a-4c and 5a-5c show that the wings of the bed distributor and the freeboard distributor, 15 and 16, respectively, may be plane as in Figure 4a, have a roof ridge shape as in Figure 5a, or be curved in a transverse section as in Figures 4b, 5b. Alternatively, the wing surface may be plane but provided with downward folds 26 along the long sides of the wing according to Figures 4c, 5c. The task of the downward folds 26 or the curved surface of the wings with the opening downwards is to spread, in a more efficient manner, the upwardly flowing fuel particles and to make difficult the build up of dust in the wings.

Figure 2b shows the location of the bed distributor 15 in relation to a fuel feed nozzle 13 with horizontal fuel supply. At a variable distance in front of the feed opening 13, the bed distributor 15 with its lowest part, the mid-portion 19, is located at a somewhat higher level than the fuel feed opening 13. The displacement in height for the bed distributor 15 is 16 cm in the example.

Figures 2a-2c illustrate the attachment of the bed wing 15 by means of holders 27 in the form of clamps, loops or the like, which surround the tubes 6. The bed distributor 15 should be displaceable in the longitudinal direction of the tubes 6 before the device is locked at the location tested. In the example, the bed distributor 15 is mounted with its lowest part 30 cm in front of the opening of a fuel feed nozzle 13, but this distance can be varied in dependence on the physical factors prevailing during the combustion.

The holders 27 are applied at bars 28, mounted across the longitudinal direction of the distributor device and with such a length that the ends of the bars 28 may bridge two parallel tube sections 6a-f, in which the bed distributor 15 may be attached in a suspended manner. The bars 28 are attached by means of supports 29a, 29b to the bed distributor 15.

In Figures 3a-3c it is seen how the freeboard distributor 16 is attached in a corresponding way by means of corresponding holders 27 surrounding the tubes 6. In the example, the freeboard distributor 16 is arranged with its lowest part, that is, the mid-section 23, centrally in the bed 5.

Figure 6 shows the combustor 1 from above, and it is clear how the bed distributors 15 and the freeboard distributors 16, respectively, according to the invention are arranged in relation to each other.

Figure 7 shows an alternative embodiment of the invention. In this embodiment, the distributor device is made as a cone 30, a bed cone and a freeboard cone, respectively, which is attached to a mid-portion 19 which may have an arbitrary shape but is made with a conical shape in the example. Holes 20 are made in the bed cone to achieve the distribution of the fuel described above. The upward terminating edge of the bed cone and the freeboard cone, respectively, may be made with an annular flange or collar to slow down fuel rising upwards along the outer side of the cone 30. The bed cone and the freeboard cone, respectively, are made with circular or oval cross section.

The generatrices in the cone 30 bend outwards in their upper part, thus obtaining a flange- or collar-like termination on the upper part of the cone 30.

The distributor device may, of course, be formed as an arbitrary body or with a plurality of wings which may be distributed at arbitrary angles around the mid-portion 19 depending on the geometry of the bed 5 and the desired distribution of the fuel in the bed 5.

The nozzles for fluidization air 14 are arranged near the distributor device for the supply of extra fluidization air. This extra fluidization air is advantageously added below the distributor device arranged in the bed, that is, below the bed distributor 15 or the bed cone.

## Claims

1. A power plant comprising a combustor (1) with a fluidizable bed (5) with combustible gaseous and particulate material, with tubes (6) for steam generation located in the combustor (1), with nozzles (14) for supply of fluidization air which fluidizes the material in the bed (5) supplied, inter alia, through fuel feed nozzles (13) and with at least one distributor (15) arranged above each fuel feed nozzle (13) and adapted to spread the bubbles rising upwards through the bed (5) containing fuel gas, fuel particles and fluidization air, **characterized** in that
- the distributor (15) comprises one distributor part with obliquely upwardly-inclined surfaces, as viewed from the horizontal plane, in the form of one or more elongated, wing-like members or in the form of a whole cone or a frustum of a cone (30), said upwardly-inclined surfaces being adapted such that said bubbles are directed outwards along the obliquely upwardly-inclined surface and are released distributed in the bed (5) while rising upwards,
- the distributor part is provided with through-holes (20) for fuel distribution,
- the distributor comprises a mid-portion (19) to which the upwardly-inclined surfaces are connected,
- said mid-portion (19) is arranged in said upwardly-rising flow of bubbles above each fuel feed nozzle (13) and distributes the bubbles to the distributor part.

2. A power plant according to claim 1, **characterized in that** the distributor part consists of wing-like members (17, 18) which are diametrically opposed, elongated and upwardly-inclined from the horizontal plane.

3. A power plant according to claim 1, **characterized in that** the distributor part consists of wing-like members (17, 18) which in a cross section exhibit a v-shape or a curved surface where the openings are facing downwards, or a plane shape.

4. A power plant according to claim 1, **characterized in that** the distributor part consists of wing-like members (17, 18) which in a cross section exhibit a plane shape with downward folds (26) along the long sides.

5. A power plant according to claim 1, **characterized in that**
- the distributor part consists of wing-like members (17, 18) and that its free ends (24, 25) have a substantially horizontal extension, and that
- the free ends of the wing-like members are tapering or have a rounded or straight termination.

6. A power plant according to claim 1, **characterized in that** the distributor part consists of a whole cone or the frustum of a cone (30), where the horizontal cross section of the cone exhibits an arbitrary curve and where the upper edge of the cone is provided with a flange or a collar.

7. A power plant according to claim 1, **characterized in that** the distributor (15) is arranged along the direction of inflow of fuel introduced into the bed (5) from a fuel feed nozzle (13) with the mid-portion (23) at a variable distance, in the horizontal direction, from said nozzle (13).

8. A power plant according to claim 1, **characterized in that** the distributor (15) is arranged at the tubes (6) in the bed (5) by means of holders (27) in the form of clamps or loops or similar means.

9. A power plant according to claim 1, **characterized in that** at least one nozzle (14) for extra fluidization air is arranged close to the distributor (15).

10. A power plant according to claim 1, **characterized in that** the material in the distributor (15) consists of steel or a steel alloy or a ceramic or a combination of any of these materials.

11. A power plant according to claim 1, **characterized in that** the material in the distributor is cooled.

12. A power plant comprising a combustor (1) with a fluidizable bed (5) with combustible gaseous and particulate material, with tubes (6) for steam generation located in the combustor (1), with nozzles (14) for supply of fluidization air which fluidizes the material in the bed (5) supplied, inter alia, through fuel feed nozzles (13) and with one distributor (16) adapted to spread fuel which rises upwards in the form of bubbles containing fuel gas, fuel particles and fluidization air, **characterized** in that
- the distributor (16) is arranged at the upper limit of the bed (5),
- the distributor (16) comprises one or more elongated, wing-like members (21, 22) or a cone (30), which wing-like members or cone, starting from a lowest point, exhibit outwardly and upwardly inclined surfaces where the elongation of each member outwards and upwards is greater than the width thereof.

13. A power plant according to claim 12, **characterized in that** the distributor (16) is designed with two diametrically opposite wing-like members (21, 22).

14. A power plant according to claim 12, **characterized in that** the wing-like members (21, 22) of the distributor in a cross section exhibit a v-shape or a curved surface, where the opening is facing downwards, or a plane shape.

15. A power plant according to claim 12, **characterized in that** the wing-like members (21, 22) of the distributor in a cross section exhibit a plane shape with downward folds (26) along the long sides.

16. A power plant according to claim 12, **characterized in that** the distributor (16) is arranged at the tubes (6) in the bed (5) by means of holders (27) in the form of clamps or loops or similar means.

17. A power plant according to claim 12, **characterized in that** the material in the distributor (16) consists of steel or a steel alloy or a ceramic or a combination of any of these materials.

18. A power plant according to claim 12, **characterized in that** the material in the distributor is cooled.

19. A power plant according to any of claims 12 - 18, **characterized** in that it comprises also at least one distributor (15) as described in any of claims 1 to 11.

## Patentansprüche

1. Kraftwerk mit einem Combustor (1) mit einem fluidisierbaren Bett (5) mit brennbarem gasförmigem und partikelförmigem Material, mit in dem Combustor angeordneten Rohren (6) zur Dampferzeugung, mit Düsen (14) für die Zuführung von Fluidisationsluft, welche das Material im Bett (5) fluidisiert, welches Material unter anderem durch Brennstoffspeisedüsen (13) zugeführt wird, und mit mindestens einem über jeder Brennstoffspeisedüse (13) angeordneten Verteiler (15), der imstande ist, die durch das Bett nach oben steigenden Blasen zu verteilen, die brennbares Gas, brennbare Partikel und Fluidisationsluft enthalten, **dadurch gekennzeichnet**, daß
- der Verteiler (15) ein Verteilerteil enthält mit, bezogen auf die horizontale Ebene, nach oben geneigten Flächen in Gestalt eines oder mehrerer langgestreckter flügelartiger Glieder oder in Gestalt eines ganzen Kegels oder eines Kegelstumpfes (30), wobei die genannten nach oben geneigten Flächen so beschaffen sind, daß die genannten Blasen längs der schräg nach oben geneigten Flächen nach außen gelenkt werden und beim Nach-Oben-Steigen im Bett (5) verteilt freigegeben werden,
- der Verteiler mit durchgehenden Löchern (20) zur Brennstoffverteilung versehen ist,
- der Verteiler ein Mittelteil (19) hat, mit welchem die nach oben geneigten Flächen verbunden sind,
- das genannte Mittelteil (19) über jeder Brennstoffspeisedüse in dem genannten nach oben steigenden Strom aus Blasen (13) angeordnet ist und die Blasen an das Verteilerteil verteilt.

2. Kraftwerk nach Anspruch 1, **dadurch gekennzeichnet**, daß das Verteilerteil aus flügelartigen GLiedern (17,18) besteht, welche einander diametral gegenüberliegen, langgestreckt sind und gegenüber der horizontalen Ebene nach oben geneigt sind.

3. Kraftwerk nach Anspruch 1, **dadurch gekennzeichnet**, daß das Verteilerteil aus flügelartigen Gliedern (17,18) besteht, deren Querschnitt V-förmig ist oder eine gekrümmte Oberfläche hat, wobei die Öffnungen nach unten weisen, oder eine ebene Form hat.

4. Kraftwerk nach Anspruch 1, **dadurch gekennzeichnet**, daß das Verteilerteil aus flügelartigen Gliedern (17,18) besteht, die im Querschnitt eine Ebene mit nach unten gerichteten Abwinkelungen (26) längs der langen Seiten zeigen.

5. Kraftwerk nach Anspruch 1, **dadurch gekennzeichnet**, daß
- das Verteilerteil aus flügelartigen Gliedern (17,18) besteht und daß seine freien Enden (24,25) eine im wesentlichen horizontale Erstreckung haben, und daß
- die freien Enden der flügelartigen Glieder sich verjüngen oder einen runden oder geraden Abschluß haben.

6. Kraftwerk nach Anspruch 1, **dadurch gekennzeichnet,** daß das Verteilerteil aus einem ganzen Kegel oder einem Kegelstumpf (30) besteht, wobei der horizontale Querschnitt des Kegels eine beliebige Kurve zeigt und wobei der obere Rand des Kegels mit einem Flansch oder einem Kragen versehen ist.

7. Kraftwerk nach Anspruch 1, **dadurch gekennzeichnet**, daß der Verteiler (15) in Richtung des Zuströmens von durch eine Brennstoffspeisedüse (13) in das Bett eingeführtem Brennstoff mit dem Mittelteil (23) in einer in horizontaler Richtung variablen Entfernung von der genannten Düse (13) angeordnet ist.

8. Kraftwerk nach Anspruch 1, **dadurch gekennzeichnet**, daß der Verteiler (15) an den Rohren (6) im Bett (5) mit Hilfe von Haltern (27) in Gestalt von Klemmverbindern oder Schleifen oder ähnlichem Gliedern angeordnet ist.

9. Kraftwerk nach Anspruch 1, **dadurch gekennzeichnet**, daß mindestens eine Düse (14) für zusätzliche Fluidisationsluft dicht am Verteiler (15) angeordnet ist.

10. Kraftwerk nach Anspruch 1, **dadurch gekennzeichnet**, daß das Material des Verteilers (15) aus Stahl oder einer Stahllegierung oder aus Keramik oder einer Kombination dieser Materialien besteht.

11. Kraftwerk nach Anspruch 1, **dadurch gekennzeichnet,** daß das Material des Verteilers gekühlt wird.

12. Kraftwerk mit einem Combustor (1) mit einem fluidisierbaren Bett (5) mit brennbarem gasförmigem und partikelförmigem Material, mit in dem Combustor angeordneten Rohren (6) zur Dampferzeugung, mit Düsen (14) für die Zuführung von Fluidisationsluft, welche das Material im Bett (5) fluidisiert, welches Material unter anderem durch Brennstoffspeisedüsen (13) zugeführt wird, und mit einem über jeder Brennstoffspeisedüse (13) angeordneten Verteiler (16), der imstande ist, Brennstoff, welcher in Form von Blasen nach oben steigt, die brennbares Gas, Brennstoffpartikel und Fluidisationsluft enthalten, zu verteilen, **dadurch gekennzeichnet,** daß
- der Verteiler (16) an der oberen Begrenzung des Bettes (5) angeordnet ist,
- der Verteiler (16) ein oder mehrere langgestreckte flügelartige Glieder (21,22) oder einen Kegel (30) enthält, wobei die flügelartigen Glieder oder der Kegel, beginnend an einem untersten Punkt, nach außen und nach oben geneigte Flächen haben, wobei die Erstreckung eines jeden Gliedes nach außen und nach oben größer ist als ihre Breite.

13. Kraftwerk nach Anspruch 12, **dadurch gekennzeichnet,** daß der Verteiler (16) zwei diametral gegenüberliegende flügelartige Glieder (21,22) hat.

14. Kraftwerk nach Anspruch 12, **dadurch gekennzeichnet**, daß die flügelartigen Glieder (21,22) des Verteilers im Querschnitt eine V-Form oder gekrümmte Fläche haben, wobei die Öffnung nach unten weist, oder eine ebene Gestalt haben.

15. Kraftwerk nach Anspruch 12, **dadurch gekennzeichnet,** daß die flügelartigen Glieder (21,22) des Verteilers im Querschnitt eine ebene Gestalt mit nach unten gerichteten Abwinkelungen (26) längs der langen Seiten haben.

16. Kraftwerk nach Anspruch 12, **dadurch gekennzeichnet,** daß der Verteiler (16) an den Rohren (6) im Bett mittels Halter (27) in Form von Klemmverbindern oder Schleifen oder ähnlichen Gliedern angeordnet ist.

17. Kraftwerk nach Anspruch 12, **dadurch gekennzeichnet**, daß das Material des Verteilers (16) aus Stahl oder einer Stahllegierung oder Keramik oder aus einer Kombination dieser Materialien besteht.

18. Kraftwerk nach Anspruch 12, **dadurch gekennzeichnet,** daß das Material des Verteilers gekühlt wird.

19. Kraftwerk nach einem der Ansprüche 12 bis 18, **dadurch gekennzeichnet**, daß es auch mindestens einen Verteiler (15) wie er in jedem der Ansprüche 1 bis 11 beschrieben ist, enthält.

## Revendications

1. Centrale électrique comprenant un brûleur (1) avec un lit (5) pouvant être fluidisé avec des matériaux particulaires et gazeux combustibles, comportant des tubes (6) pour la production de vapeur situés dans le brûleur (1), des buses (14) pour l'alimentation en air fluidisé qui fluidisent le matériau dans le lit (5) alimenté, entre autres par des buses (13) d'alimentation en combustible et comportant au moins un répartiteur (15) disposé au-dessus de chaque buse (13) d'alimentation en combustible et conçu pour répartir les bulles qui se déplacent vers le haut dans le lit (5) et qui contiennent du gaz de combustible des particules de combustible et de l'air de fluidisation, caractérisée en ce que
- le répartiteur (15) comporte une partie de répartiteur ayant des surfaces inclinées vers le haut obliquement, telles que vues à partir du plan horizontal, sous la forme d'un ou de plusieurs éléments oblongs en forme d'ailes ou sous la forme d'un cône plein ou d'un tronc d'un cône (30), ces surfaces inclinées vers le haut étant conçues de manière que les bulles sont dirigées vers l'extérieur le long des surfaces inclinées vers le haut obliquement et sont libérées et réparties dans le lit tout en s'élevant,
- la partie de répartiteur est munie de trous (20) de traversée pour la répartition du combustible,
- le répartiteur comporte une partie (19) de milieu à laquelle sont connectées les surfaces inclinées vers le haut,
- la partie (19) de milieu est disposée dans l'écoulement se déplaçant vers le haut des bulles au-dessus de chaque buse (13) d'alimentation en combustible et répartit les bulles à la partie de répartiteur.

2. Centrale électrique suivant la revendication 1, caractérisée en ce que le répartiteur (15) consiste en éléments (17,18) en forme d'ailes qui sont diamétralement opposés, oblongs et inclinés vers le haut à partir du plan horizontal.

3. Centrale électrique suivant la revendication 1, caractérisée en ce que la partie de répartiteur consiste en des éléments (17,18) en forme d'ailes qui, dans une section transversale, présentent une forme en V ou une surface courbe ou les ouvertures sont dirigées vers le bas ou une forme plane.

4. Centrale électrique suivant la revendication 1, caractérisée en ce que le répartiteur (15) consiste en des éléments (17,18) en forme d'ailes qui, dans une section transversale, présentent une forme plane avec des pliages (26) orientés vers le bas suivant les côtés en longueur.

5. Centrale électrique suivant la revendication 1, caractérisée en ce que
- le répartiteur (15) consiste en des éléments (17,18) en forme d'ailes et en ce que ses extrémités (24,25) libres ont un prolongement sensiblement horizontal et en ce que
- les extrémités libres des éléments en forme d'ailes sont biseautées ou se terminent de manière arrondie ou droite.

6. Centrale électrique suivant la revendication 1, caractérisée en ce que le répartiteur (15) consiste en un cône plein ou en un tronc d'un cône (30), la section transversale horizontale du cône présentant une courbe arbitraire et le bord supérieur du cône étant muni d'un collier ou d'une bride.

7. Centrale électrique suivant la revendication 1, caractérisée en ce que le répartiteur (15) est disposé suivant la direction d'écoulement d'entrée du combustible qui est introduit dans le lit (5) à partir d'une buse (13) d'alimentation en combustible, la partie (23) de milieu étant à distance variable, suivant la direction horizontale, de la buse (13).

8. Centrale électrique suivant la revendication 1, caractérisée en ce que le répartiteur (15) est disposé au voisinage des tubes (6) dans le lit (5) au moyen de supports (27) sous la forme de pinces ou de boucles ou de moyens similaires.

9. Centrale électrique suivant la revendication 1, caractérisée en ce qu'au moins une buse (14) pour de l'air de fluidisation supplémentaire est disposé à proximité du répartiteur (15).

10. Centrale électrique suivant la revendication 1, caractérisée en ce que le matériau dans le répartiteur (15) consiste en acier ou en alliage d'acier ou en céramique ou en une combinaison de n'importe laquelle de ces matériaux.

11. Centrale électrique suivant la revendication 1, caractérisée en ce que le matériau dans le répartiteur est refroidi.

12. Centrale électrique comprenant un brûleur (1) avec un lit (5) pouvant être fluidisé avec des matériaux particulaires ou gazeux combustibles, comportant des tubes (6) pour la production de vapeur situés dans le brûleur (1), des buses (14) pour l'alimentation d'air de fluidisation qui fluidisent le matériau dans le lit (5) qui est alimenté, entre autres par des buses (13) d'alimentation en combustible et comportant un répartiteur (16) conçu pour répartir le combustible qui se déplace vers le haut sous la forme de bulles contenant des gaz de combustible, des particules de combustible et de l'air de fluidisation, caractérisée en ce que
- le répartiteur (16) est disposé à la limite supérieure du lit (5),
- le répartiteur (16) comporte un ou plusieurs éléments (21, 22) en forme d'ailes oblongs ou un cône (30), ce cône ou ces éléments en forme d'ailes, partant d'un point le plus bas, présentant des surfaces inclinées vers le haut et vers l'extérieur, dans lesquelles l'allongement de chaque élément vers l'extérieur et vers le haut est supérieur à la largeur de ceux-ci.

13. Centrale électrique suivant la revendication 12, caractérisée en ce que le répartiteur (16) est conçu avec deux éléments (21,22) en forme d'ailes diamétralement opposés.

14. Centrale électrique suivant la revendication 12, caractérisée en ce que l'élément (21,22) en forme d'aile du répartiteur dans une section transversale présente une forme en V ou une surface courbe, où les ouvertures sont orientées vers le bas, ou une forme plane.

15. Centrale électrique suivant la revendication 12, caractérisée en ce que les éléments (21,22) en forme d'ailes du répartiteur dans une section transversale présentent une forme plane avec des pliages (26) orientés vers le bas suivant les côtés en longueur.

16. Centrale électrique suivant la revendication 12, caractérisée en ce que le répartiteur (16) est disposé au voisinage des tubes (6) dans le lit (5) au moyen de supports (27) sous la forme de pinces ou de moyens similaires.

17. Centrale électrique suivant la revendication 12, caractérisée en ce que le matériau dans le répartiteur (16) consiste en acier ou un alliage d'acier ou en céramique ou en une combinaison de n'importe lesquels de ces matériaux.

18. Centrale électrique suivant la revendication 12, caractérisée en ce que le matériau du répartiteur est refroidi.

19. Centrale électrique suivant n'importe laquelle des revendications 12 à 18, caractérisée en ce qu'il comporte également au moins un répartiteur (15) tel que décrit dans n'importe laquelle des revendications 1 à 11.
